# FASCICULE DE BREVET EUROPEEN

(11) **EP 3 868 156 B1**
(45) Date de publication et mention de la délivrance du brevet: **02.08.2023**
(21) Numéro de dépôt: 19824192.9
(22) Date de dépôt: 08.10.2019
(51) Int. Cl.: H04W 56/00, H04W 84/20

(54) **PROCÉDÉ DE COMMUNICATION ENTRE NOEUDS IAB EN MODE BIDIRECTIONNEL ALTERNÉ PERMETTANT LE MULTIPLEXAGE DES COMMUNICATIONS**
VERFAHREN ZUR KOMMUNIKATION ZWISCHEN IAB-KNOTEN IM ALTERNIERENDEN BIDIREKTIONALEN MODUS ZUR ERMÖGLICHUNG VON NACHRICHTENMULTIPLEXING
METHOD FOR COMMUNICATION BETWEEN IAB NODES IN ALTERNATING BIDRECTIONAL MODE, ALLOWING COMMUNICATION MULTIPLEXING

(30) Priorité: 17.10.2018 FR 1859588
(43) Date de publication de la demande: 25.08.2021
(73) Titulaire: Orange, 92130 Issy-les-Moulineaux (FR)
(72) Inventeur: LIN, Hao, 92326 CHÂTILLON CEDEX (FR)
(74) Mandataire: Vidon Brevets & Stratégie
(86) Numéro de dépôt international: PCT/FR2019/052382
(87) Numéro de publication internationale: WO 2020/079348

(56) Documents cités:
- US-A1- 2005 136 835
- US-A1- 2013 215 814

## Description

### 1. Domaine de l'invention

Le domaine de l'invention est celui du déploiement des réseaux cellulaires dans le contexte de la 5G ou 5^{ème} génération de normes pour la téléphonie mobile. Plus précisément, l'invention concerne les architectures de réseaux cellulaires dites IAB pour *Integrated Access and Backhaul* (ou en français accès et collecte intégrés).

### 2. Art antérieur et ses inconvénients

Afin de satisfaire une demande croissante en haut débit, les techniques de communication utilisées dans le cadre de la 5G reposent sur l'utilisation de larges bandes de fréquences dans le spectre de fréquences compris entre 30 et 300 GHz. L'utilisation de ces hautes fréquences a un impact sur la portée de l'émission radio des stations de bases qui s'en trouve réduite. Il en résulte une densification de la répartition des stations de bases afin de compenser cette réduction de portée des émissions radio.

Pour répondre à ce besoin de densification de la répartition des stations de bases, différentes architectures de réseaux cellulaires sont proposées. Parmi ces architectures de réseaux cellulaires se trouve l'architecture IAB.

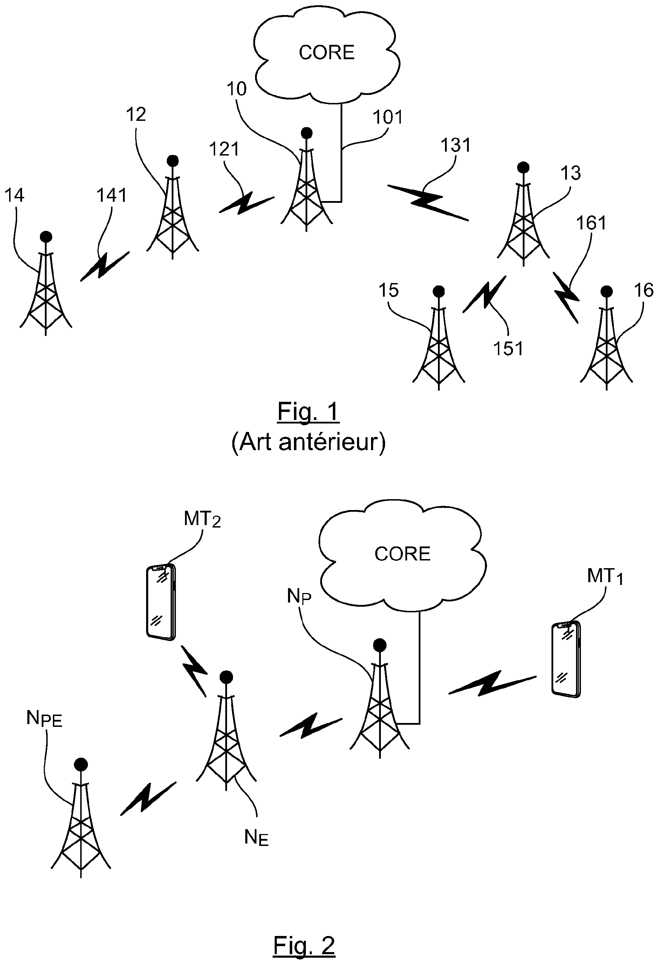

La **figure 1** représente une telle architecture IAB. Une telle architecture comprend un premier noeud IAB 10, appelé noeud donneur. Le noeud donneur 10 est connecté au réseau coeur CORE au moyen d'une liaison de type filaire 101. Dans l'exemple représenté à la figure 1, le noeud donneur 10 est connecté à deux autres noeuds IAB le noeud 12 et le noeud 13 au moyen des liaisons radio 121 et respectivement 131.

Le noeud 12 est connecté à un autre noeud IAB, le noeud 14 au moyen d'une liaison radio 141. Le noeud 13 est connecté à un autre noeud IAB, le noeud 15 au moyen d'une liaison radio 151. Enfin, le noeud 15 est connecté à un autre noeud IAB, le noeud 16 au moyen d'une liaison radio 161.

Ainsi, le noeud 10 agit en tant que parent pour les noeuds 12 et 13 qui, eux-mêmes agissent en tant que parent respectivement pour les noeuds 14 et 15. Enfin, le noeud 15 agit en tant que parent pour le noeud 16.

Un noeud IAB embarque deux fonctions, une fonction dite « station de base » et une fonction dite «terminal mobile ». Lorsqu'un noeud IAB, tel que le noeud 12, par exemple, communique avec son noeud parent, ici le noeud 10, la fonction « terminal mobile » est activée et le noeud 12 se comporte comme un terminal mobile vis-à-vis du noeud 10. Lorsque le noeud 12 communique avec son noeud enfant, ici le noeud 14, la fonction « station de base » est activée et le noeud 12 se comporte comme une station de base à l'égard du noeud 14.

Ainsi, en fonction de la nature du lien qui l'unit au noeud IAB avec lequel il communique, un noeud IAB exerce une fonction de station de base ou une fonction de terminal mobile.

Lorsque la fonction « station de base » est activée dans un noeud IAB, celui-ci contrôle les canaux de transmission descendant, c'est-à-dire les canaux utilisés pour transmettre des données depuis le noeud IAB parent vers le noeud enfant, et les canaux de transmission remontant, c'est-à-dire les canaux utilisés pour transmettre des données depuis le noeud IAB enfant vers le noeud parent, de ses noeuds IAB enfants. Un noeud enfant réceptionne des signaux de planification transmis par son noeud parent lesquels transportent notamment des informations relatives à des horaires d'émission et/ou des horaires de réception de données à destination ou en provenance du noeud enfant, ainsi que la durée de ces transmissions.

Les noeuds IAB communiquent entre eux en mode bidirectionnel à l'alternat, ou *half-duplex.* En d'autres termes, un noeud IAB ne peut pas simultanément recevoir des données émises par son noeud parent et émettre des données à destination de son noeud enfant ou inversement.

Cependant, un noeud IAB peut recevoir simultanément des données émises par son noeud parent et par son noeud enfant ou émettre simultanément des données à destination de son noeud parent et à destination de son noeud enfant.

Un tel multiplexage des communications du noeud IAB requiert l'exécution simultanée de la fonction « terminal mobile » et de la fonction « station de base » par le noeud IAB. Or ces deux fonctions ne sont pas synchronisées entre elles et il en résulte une absence d'alignement temporel entre les données communiquées avec le noeud parent et les données communiquées avec le noeud enfant à l'origine d'interférences impactant négativement la qualité des communications entre les différents noeud IAB impliqués.

Une solution pour résoudre ce problème consiste à embarquer deux unités de traitement de bande de base, une première unité de traitement de bande de base traitant les données à transmettre à destination du noeud parent et une deuxième unité de traitement de bande de base traitant les données à transmettre au noeud enfant. Chacune des unités de traitement de bande de base traitant ses données selon ses propres horaires d'émission.

Le noeud IAB embarque également un module de traitement des interférences qui permet de décoder des données reçues par exemple depuis le noeud parent, les soustraire du signal reçu dans lequel les données émises par le noeud parent et le noeud enfant sont agrégées, puis décoder les données émises par le noeud enfant.

Une telle solution souffre, aussi bien pour le traitement des données émises par le noeud IAB que pour le traitement des données reçues par le noeud IAB, d'un temps de traitement des données long. De plus les noeuds IAB doivent embarquer deux unités de traitement de bande de base ainsi qu'un module de traitement des interférences. Ceci a un impact négatif sur la structure d'un tel noeud IAB et sur son coût.

Il existe donc un besoin d'une technique permettant un multiplexage des communications d'un noeud IAB ne présentant pas tout ou partie des inconvénients précités. Des exemples de l'art antérieur sont US2005/136835 et US2013/215814.

### 3. Exposé de l'invention

L'invention a pour objet un procédé de communication de données entre un noeud courant, un noeud parent du noeud courant et un noeud enfant du noeud courant communicant entre eux en mode bidirectionnel à l'alternat, le procédé de communication étant mis en oeuvre par le noeud courant et comprenant les étapes suivantes :
- réception d'une demande de réservation, émise par le noeud parent, d'au moins un créneau temporel d'un canal de communication établi entre le noeud parent et le noeud courant, le créneau temporel réservé étant associé à une première direction de communication,
- détermination d'une valeur d'un décalage temporel destiné à être utilisé par le noeud enfant afin d'ajuster un horaire de communication de données avec le noeud courant, l'ajustement de l'horaire de communication permettant la communication desdites données entre le noeud courant et le noeud enfant durant le créneau temporel réservé,
- transmission à destination du noeud enfant de ladite valeur du décalage temporel et d'une deuxième direction de communication,
- lorsque ladite valeur du décalage temporel est non nulle, communication simultanée de données avec le noeud parent et le noeud enfant pendant le créneau temporel réservé selon respectivement la première direction de communication et la deuxième direction de communication.

La solution objet de l'invention consiste à introduire un décalage temporel lors du traitement des données par le noeud enfant afin de prendre en compte l'absence de synchronisation existant entre la fonction « terminal mobile » et la fonction « station de base » du noeud courant.

Une telle solution ne nécessite pas l'introduction de modules de traitement d'interférences ou d'unités de traitement de bande de base supplémentaire au sein d'un noeud IAB. De plus, l'introduction d'un décalage temporel afin de permettre le multiplexage des communications du noeud courant présente une faible complexité de traitement des données. Ainsi, le temps de traitement des données par le noeud IAB est peu ou pas impacté par la mise en oeuvre de la solution.

Selon un mode de réalisation du procédé de communication, lorsque la valeur du décalage temporel est nulle, aucune communication simultanée de données avec le noeud parent et le noeud enfant pendant le créneau temporel réservé n'est possible.

Une valeur du décalage temporel nulle ne signifie pas que les fonctions « station de base » et « terminal mobile » sont synchrones. Une valeur du décalage temporel nulle signifie que le noeud IAB détermine que les conditions permettant le multiplexage des communications ne sont pas remplies. C'est par exemple le cas lorsque la réservation émise par le noeud parent est reçue par le noeud enfant trop tardivement pour que le noeud enfant puisse planifier une communication avec le noeud petit enfant dans le créneau temporel réservé.

Selon un mode de réalisation du procédé de communication, la première direction de communication correspondant à une transmission de données par le noeud parent à destination du noeud courant et la deuxième direction de communication correspondant à une transmission de données par le noeud enfant à destination du noeud courant, le procédé comprend en outre une étape de transmission, à destination du noeud enfant, d'une valeur d'un temps de propagation des données entre le noeud enfant et le noeud courant destinée à être utilisée par le noeud enfant avec ladite valeur du décalage temporel afin d'ajuster l'horaire de transmission de données à destination du noeud courant.

Le noeud courant informe le noeud enfant qu'il doit modifier un horaire d'émission des données en fonction du décalage temporel afin de prendre en compte l'absence de synchronisation entre les fonctions « terminal mobile » et « station de base » du noeud courant mais aussi en fonction du temps de propagation des données entre le noeud enfant et le noeud courant afin de s'assurer que la transmission de données est effectuée à un horaire qui permet aux données d'être reçues par le noeud courant au même instant que les données transmises par le noeud parent.

Selon un mode de réalisation du procédé de communication, la première direction de communication correspondant à une transmission de données par le noeud courant à destination du noeud parent et la deuxième direction de communication correspondant à une transmission de données par le noeud courant à destination du noeud enfant, le procédé comprend en outre une étape de réception d'une valeur d'un temps de propagation des données entre le noeud courant et le noeud parent, transmise par le noeud parent, destinée à être utilisée par le noeud courant afin d'ajuster l'horaire de transmission de données à destination du noeud parent.

Le noeud courant est informé par le noeud parent qu'il doit modifier un horaire d'émission des données en fonction du temps de propagation des données entre le noeud courant et le noeud parent afin de s'assurer que la transmission de données est effectuée à un horaire qui permet aux données d'être reçues par le noeud parent à un horaire prévu par ce dernier.

L'invention a pour objet un second procédé de communication selon la revendication 5.

Selon un mode de réalisation du procédé de communication, la direction de communication correspondant à une transmission de données par le noeud courant à destination du noeud enfant, le procédé de communication comprend en outre des étapes de :
- détermination de l'horaire de réception de données émises par le noeud courant au moyen de ladite valeur du décalage temporel.

L'invention concerne encore un équipement de communication apte à communiquer avec un équipement de communication parent et un équipement de communication enfant en mode bidirectionnel à l'alternat, l'équipement de communication comprenant :
- des moyens de réception d'une demande de réservation, émise par l'équipement de communication parent, d'au moins un créneau temporel d'un canal de communication établi entre l'équipement de communication parent et l'équipement de communication, le créneau temporel réservé étant associé à une première direction de communication,
- des moyens de détermination d'une valeur d'un décalage temporel destiné à être utilisé par l'équipement de communication enfant afin d'ajuster un horaire de communication de données avec l'équipement de communication, l'ajustement de l'horaire de communication permettant la communication desdites données entre l'équipement de communication et l'équipement de communication enfant durant le créneau temporel réservé,
- des moyens de transmission à destination de l'équipement de communication enfant de ladite valeur du décalage temporel et d'une deuxième direction de communication,
- des moyens de communication simultanée de données avec l'équipement de communication parent et l'équipement de communication enfant pendant le créneau temporel réservé selon respectivement la première direction de communication et la deuxième direction de communication lorsque ladite valeur du décalage temporel est non nulle.

Un autre objet de l'invention concerne un équipement de communication selon la revendication 8.

L'invention concerne enfin des produits programme d'ordinateur comprenant des instructions de code de programme pour la mise en oeuvre des procédés tels que décrits précédemment, lorsqu'ils sont exécutés par un processeur.

### 4. Liste des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
La **figure 1** représente une architecture IAB selon l'art antérieur,
la **figure 2** représente une architecture IAB simplifiée dans laquelle l'invention est implémentée selon ses différents modes de réalisation,
la **figure 3** représente les différentes étapes mises en oeuvre lors de l'exécution du procédé de communication selon un premier mode de réalisation de l'invention,
la **figure 4** représente le découpage en créneaux temporels SIₙ, ou n est un entier naturel, d'un canal de communication établi entre le noeud enfant N_{E} et le noeud parent N_{P} selon le premier mode de réalisation de l'invention,
la **figure 5** représente les différentes étapes mises en oeuvre lors de l'exécution du procédé de communication selon un deuxième mode de réalisation de l'invention,
la **figure 6** représente le découpage en créneaux temporels SIₙ, ou n est un entier naturel, d'un canal de communication établi entre le noeud enfant N_{E} et le noeud parent N_{P} selon le deuxième mode de réalisation de l'invention,
la **figure 7** représente un noeud IAB selon un mode de réalisation de l'invention.

### 5. Description détaillée de modes de réalisation de l'invention

La **figure 2** représente une architecture IAB simplifiée dans laquelle l'invention est implémentée selon ses différents modes de réalisation.

Dans cette architecture simplifiée, un premier noeud IAB dit noeud parent N_{P} est connecté au moyen d'une connexion filaire au réseau coeur CORE. Le noeud parent N_{P} est connecté à un noeud IAB enfant N_{E} et le noeud enfant est connecté à un noeud IAB petit-enfant N_{PF}. Le noeud enfant N_{E} est un noeud parent pour le noeud petit-enfant N_{PE}. Un premier terminal mobile MT₁ est attaché au noeud parent N_{P} qui agit en tant que station de base pour le terminal mobile MT₁. Un deuxième terminal mobile MT₂ est attaché au noeud parent N_{E} qui agit en tant que station de base pour le terminal mobile MT₂.

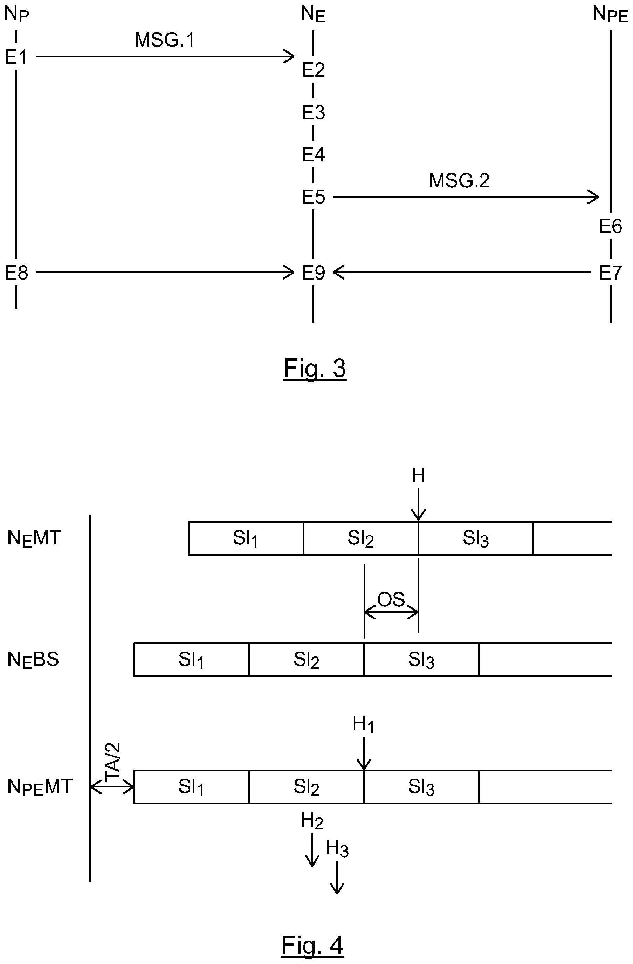

La **figure 3** représente les différentes étapes mises en oeuvre lors de l'exécution du procédé de communication selon un premier mode de réalisation de l'invention. Le noeud enfant N_{E} a activé la fonction « terminal mobile » et la fonction « station de base ». La fonction « station de base » du noeud enfant N_{E} est donc synchronisée avec la fonction « station de base » du noeud parent N_{P}. Dans ce premier mode de réalisation, le noeud enfant N_{E} reçoit simultanément des données en provenance du noeud parent N_{P} et du noeud petit-enfant N_{PE}.

La **figure 4** représente le découpage en créneaux temporels SIₙ, ou n est un entier naturel, d'un canal de communication établi entre le noeud enfant N_{E} et le noeud parent N_{P}. Le découpage en créneau temporel SIₙ se fait en fonction de l'horloge associée à la fonction « terminal mobile » N_{E} MT du noeud enfant N_{E} car c'est au moyen de cette fonction que le noeud enfant N_{E} reçoit les données transmises par le noeud parent N_{P}.

En référence à la figure 3 et à la figure 4, au cours d'une étape E1, le noeud enfant N_{E} reçoit un message MSG1 en provenance du noeud parent N_{P}. Le message MSG1 comprend une demande de réservation d'au moins un créneau temporel, ici le troisième créneau temporel SI3, et une direction de transmission des données, ici la transmission est une transmission descendante. Le créneau horaire SI3 est également associé à un horaire de transmission H.

Au cours d'une étape E2, le noeud enfant N_{E} détermine s'il est possible de programmer, au même horaire que l'horaire H associé au créneau temporel SI3 la réception de données émises par le noeud petit enfant N_{PE}.

Si le noeud enfant N_{E} détermine qu'il est possible de programmer la réception de données émises par le noeud petit enfant N_{PE} au même horaire H que la réception de données émises par le noeud parent N_{P}, le noeud enfant N_{E} détermine une valeur d'un décalage temporel OS existant entre une horloge associée à la fonction « terminal mobile » N_{E} TM et une horloge associée à la fonction « station de base » N_{E} BS du noeud enfant au cours d'une étape E3.

Si le noeud enfant N_{E} détermine qu'il est impossible de programmer la réception de données émises par le noeud petit enfant N_{PE} au même horaire H que la réception de données émises par le noeud parent N_{P}, alors la valeur du décalage temporel OS est nulle.

Une valeur du décalage temporel OS nulle ne signifie pas que les fonctions « station de base » et « terminal mobile » du noeud enfant N_{E} sont synchrones. Une valeur du décalage temporel OS nulle signifie que le noeud enfant N_{E} détermine que les conditions permettant le multiplexage des communications avec le noeud parent N_{P} et le noeud petit enfant N_{PE} ne sont pas remplies. C'est par exemple le cas lorsque la demande de réservation émise par le noeud parent N_{P} est reçue par le noeud enfant N_{E} trop tardivement pour qu'il puisse planifier une communication avec le noeud petit enfant N_{PE} dans le créneau temporel réservé.

Lorsqu'elle est non nulle, la valeur du décalage temporel OS est destiné à être utilisée par le noeud petit enfant N_{PE} afin d'ajuster un horaire de transmission H₃ des données avec le noeud enfant N_{E}, l'ajustement de l'horaire de transmission permettant la communication desdites données entre le noeud enfant N_{E} et le noeud petit enfant N_{PE} à l'horaire H associé au créneau temporel SI3 réservé par le noeud parent N_{P}.

Au cours d'une étape E4 facultative, le noeud enfant N_{E} détermine une valeur d'un temps de propagation des données TA/2 entre le noeud enfant N_{E} et le noeud petit enfant N_{PE} destinée à être utilisée par le noeud petit enfant N_{PE} avec la valeur du décalage temporel OS afin d'ajuster l'horaire de transmission des données à destination du noeud enfant N_{E}. Une telle étape est facultative, car le noeud petit enfant N_{PE} peut déjà avoir connaissance cette valeur.

Au cours d'une étape E5, le noeud enfant N_{E} transmet un message MSG2 à destination du noeud petit enfant N_{PE} comprenant la valeur du décalage temporel OS, une direction de transmission des données, ici la transmission est une transmission montante, et éventuellement la valeur du temps de propagation des données TA/2 déterminée au cours de l'étape E4.

Dans une étape E6, le noeud petit enfant N_{PE} détermine l'horaire de transmission H₃ des données à destination du noeud enfant N_{E}. L'horaire de transmission H₃ des données est obtenu en corrigeant un horaire théorique H₁ de transmission de données du créneau temporel SI3 d'un canal de transmission établi entre le noeud petit enfant N_{PE} et le noeud enfant N_{E} au moyen de la valeur du temps de propagation des données TA/2. Un nouvel horaire de transmission H₂ des données est déterminé en décalant l'horaire théorique H₁ de transmission de données dans le temps de la valeur du temps de propagation des données TA/2. Ainsi, l'horaire de transmission H₂ des données intervient plus tôt que l'horaire théorique H₁ de transmission des données d'une durée correspondant à la valeur du temps de propagation des données TA/2. L'horaire de transmission H₃ des données à destination du noeud enfant N_{E} est enfin obtenu en ajoutant la valeur du décalage temporel OS à l'horaire de transmission H₂ des données. Ainsi l'horaire de transmission H₃ des données intervient plus tôt que l'horaire théorique H₁ de transmission de données mais plus tard que l'horaire de transmission H₂ des données.

Dans une étape E7, le noeud petit enfant N_{PE} émet les données à destination du noeud enfant N_{E} à l'horaire de transmission H₃ des données s'assurant ainsi que les données sont reçues à l'instant H par le noeud enfant N_{E} au cours d'une étape E9.

Dans une étape E8, le noeud parent N_{P} émet les données à destination du noeud enfant N_{E} conformément à la réservation de ressources effectuée au cours de l'étape E1 s'assurant ainsi que les données sont reçues à l'instant H par le noeud enfant N_{E} au cours de l'étape E9.

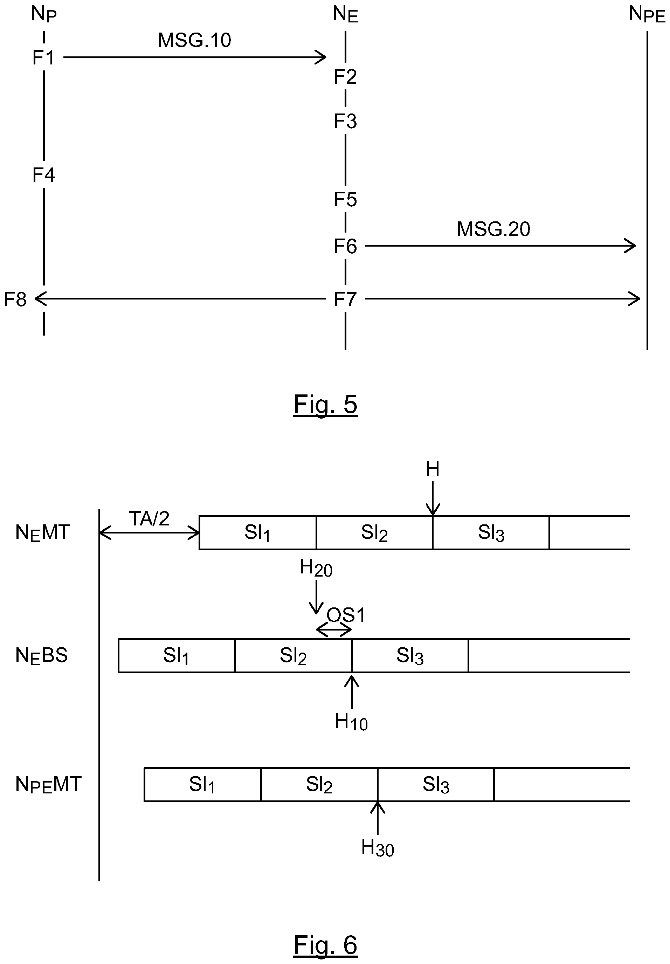

La **figure 5** représente les différentes étapes mises en oeuvre lors de l'exécution du procédé de communication selon un deuxième mode de réalisation de l'invention. Le noeud enfant N_{E} a activé la fonction « terminal mobile » et la fonction « station de base ». La fonction « station de base » du noeud enfant N_{E} est donc synchronisée avec la fonction « station de base » du noeud parent N_{P}. Dans ce deuxième mode de réalisation, le noeud enfant N_{E} émet simultanément des données à destination du noeud parent N_{P} et du noeud petit-enfant N_{PE}.

La **figure 6** représente le découpage en créneaux temporels SIₙ, ou n est un entier naturel, d'un canal de communication établi entre le noeud enfant N_{E} et le noeud parent N_{P}. Le découpage en créneau temporel SIₙ se fait en fonction de l'horloge associée à la fonction « terminal mobile » N_{E} MT du noeud enfant N_{E} car c'est au moyen de cette fonction que le noeud enfant N_{E} reçoit les données transmises par le noeud parent N_{P}.

En référence à la figure 5 et à la figure 6, au cours d'une étape F1, le noeud enfant N_{E} reçoit un message MSG10 en provenance du noeud parent N_{P}. Le message MSG10 comprend une demande de réservation d'au moins un créneau temporel, ici le troisième créneau temporel SI3, et une direction de transmission des données, ici la transmission est une transmission montante. Le créneau horaire SI3 est également associé à un horaire de transmission H.

Au cours d'une étape F2, le noeud enfant N_{E} détermine s'il est possible de programmer, au même horaire que l'horaire H associé au créneau temporel SI3 la transmission de données à destination du le noeud petit enfant N_{PE}.

Si le noeud enfant N_{E} détermine qu'il est possible de programmer la transmission de données à destination du noeud petit enfant N_{PE} au même horaire H que la transmission de données à destination du noeud parent N_{P}, le noeud enfant N_{E} détermine une valeur d'un décalage temporel OS1 existant entre une horloge associée à la fonction « terminal mobile » N_{E} TM et une horloge associée à la fonction « station de base » N_{E} BS du noeud enfant au cours d'une étape F3.

Si le noeud enfant N_{E} détermine qu'il est impossible de programmer la transmission de données à destination du noeud petit enfant N_{PE} au même horaire H que la transmission de données à destination du noeud parent N_{P}, alors la valeur du décalage temporel OS1 est nulle.

Une valeur du décalage temporel OS1 nulle signifie que le noeud enfant N_{E} détermine que les conditions permettant le multiplexage des communications avec le noeud parent N_{P} et le noeud petit enfant N_{PE} ne sont pas remplies. C'est par exemple le cas lorsque la demande de réservation émise par le noeud parent N_{P} est reçue par le noeud enfant N_{E} trop tardivement pour qu'il puisse planifier une communication avec le noeud petit enfant N_{PE} dans le créneau temporel réservé.

Lorsqu'elle est non nulle, la valeur du décalage temporel OS1 est destinée à informer le noeud petit enfant N_{PE} d'un horaire de réception des données émises par le noeud enfant N_{E} qui est décalé par rapport à un horaire théorique H₃₀ de réception des données fixé préalablement. Le décalage de l'horaire de transmission par le noeud enfant N_{E} permettant la transmission desdites données entre le noeud enfant N_{E} et le noeud petit enfant N_{PE} à l'horaire H associé au créneau temporel SI3 réservé par le noeud parent N_{P}.

Au cours d'une étape F4 facultative, le noeud parent N_{P} détermine une valeur d'un temps de propagation des données TA/2 entre le noeud enfant N_{E} et le noeud parent N_{P} destinée à être utilisée par le noeud enfant N_{E} avec la valeur du décalage temporel OS1 afin d'ajuster l'horaire de transmission des données à destination du noeud parent N_{P}. Une telle étape est facultative, car le noeud enfant N_{E} peut déjà avoir connaissance cette valeur.

Dans une étape F5, le noeud enfant N_{E} détermine l'horaire de transmission H₂₀ des données à destination du noeud petit enfant N_{PE}. L'horaire de transmission H₂₀ des données est obtenu en corrigeant un horaire théorique H₁₀ de transmission de données du créneau temporel SI3 correspondant à la fonction « station de base » du noeud enfant N_{E} au moyen de la valeur du décalage temporel OS1. L'horaire de transmission H₂₀ des données est déterminé en décalant l'horaire théorique H₁₀ de transmission des données dans le temps de la valeur du décalage temporel OS1. Ainsi, l'horaire de transmission H₂₀ des données intervient plus tôt que l'horaire théorique H₁₀ de transmission de données d'une durée correspondant à la valeur du décalage temporel OS1. Ainsi l'horaire de transmission H₂₀ des données à destination du noeud petit enfant N_{PE} intervient plus tôt que l'horaire théorique de transmission H₁₀. L'horaire de transmission H₂₀ des données à destination du noeud petit enfant N_{PE} correspond à l'horaire H réservé par le noeud parent anticipé de la valeur du temps de propagation des données TA/2 et corrigé du décalage temporel OS1.

Au cours d'une étape F6, le noeud enfant N_{E} transmet un message MSG20 à destination du noeud petit enfant N_{PE} comprenant la valeur du décalage temporel OS1, et une direction de transmission des données, ici la transmission est une transmission descendante.

Dans une étape F7, le noeud enfant N_{E} émet les données à destination du noeud parent N_{E} à l'horaire de transmission H anticipé de la valeur du temps de propagation des données TA/2 s'assurant ainsi que les données sont reçues à l'instant H par le noeud parent N_{P} au cours d'une étape F8.

Dans l'étape F7, le noeud enfant N_{E} émet les données à destination du noeud petit enfant N_{PE} à l'horaire de transmission H₂₀ des données s'assurant ainsi que les données sont transmises de manière à respecter la réservation de ressources effectuée par le noeud parent au cours de l'étape F1. Le noeud petit enfant N_{PE} étant informé de la transmission anticipée des données à la cour de l'étape F6, il peut les traiter correctement.

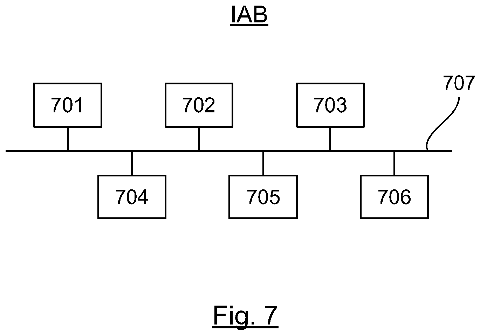

La **figure 7** représente un noeud IAB selon un mode de réalisation de l'invention. Un tel noeud IAB est apte à mettre en oeuvre toutes les étapes du procédé décrit en référence aux figures 3 à 6 selon qu'il est un noeud parent, un noeud enfant ou un noeud petit enfant.

Un noeud IAB peut comprendre au moins un processeur matériel 701, une unité de stockage 702, un dispositif de saisie 703, un dispositif d'affichage 704, une interface 705, et au moins une interface de réseau 706 qui sont connectés entre eux au travers d'un bus 707. Bien entendu, les éléments constitutifs du noeud IAB peuvent être connectés au moyen d'une connexion autre qu'un bus.

Le processeur 701 commande les opérations du noeud IAB. L'unité de stockage 702 stocke au moins un programme pour la mise en oeuvre d'un procédé de communication selon un mode de réalisation de l'invention à exécuter par le processeur 701, et diverses données, telles que des paramètres utilisés pour des calculs effectués par le processeur 701, des données intermédiaires de calculs effectués par le processeur 701, etc. Le processeur 701 peut être formé par tout matériel ou logiciel connu et approprié, ou par une combinaison de matériel et de logiciel. Par exemple, le processeur 701 peut être formé par un matériel dédié tel qu'un circuit de traitement, ou par une unité de traitement programmable telle qu'une unité centrale de traitement (*Central Processing Unit*) qui exécute un programme stocké dans une mémoire de celui-ci.

L'unité de stockage 702 peut être formée par n'importe quel moyen approprié capable de stocker le programme ou les programmes et des données d'une manière lisible par un ordinateur. Des exemples d'unité de stockage 702 comprennent des supports de stockage non transitoires lisibles par ordinateur tels que des dispositifs de mémoire à semi-conducteurs, et des supports d'enregistrement magnétiques, optiques ou magnéto-optiques chargés dans une unité de lecture et d'écriture.

Le dispositif de saisie 703 peut être formé par un clavier, un dispositif de pointage tel qu'une souris à utiliser par un utilisateur pour entrer des commandes. Le dispositif d'affichage 704 peut être également formé par un module d'affichage, tel que par exemple une interface graphique utilisateur ou GUI (pour *Graphical User Interface*).

L'interface 705 fournit une interface entre du noeud IAB et un appareil externe tel qu'un terminal mobile MT1. L'interface 705 peut communiquer avec l'appareil externe via une connexion sans fil.

Au moins une interface réseau 706 fournit une connexion entre le noeud IAB et un autre noeud IAB via une connexion radio. L'interface réseau 706 peut fournir le cas échéant une connexion filaire avec le réseau coeur CORE.

## Revendications

1. Procédé de communication de données entre un noeud courant, un noeud parent du noeud courant et un noeud enfant du noeud courant communicant entre eux en mode bidirectionnel à l'alternat, le procédé de communication étant mis en oeuvre par le noeud courant et comprenant les étapes suivantes :
- réception d'une demande de réservation, émise par le noeud parent, d'au moins un créneau temporel d'un canal de communication établi entre le noeud parent et le noeud courant, le créneau temporel réservé étant associé à une première direction de communication,
- détermination d'une valeur d'un décalage temporel destiné à être utilisé par le noeud enfant afin d'ajuster un horaire de communication de données avec le noeud courant, l'ajustement de l'horaire de communication permettant la communication desdites données entre le noeud courant et le noeud enfant durant le créneau temporel réservé,
- transmission à destination du noeud enfant de ladite valeur du décalage temporel et d'une deuxième direction de communication,
- lorsque ladite valeur du décalage temporel est non nulle, communication simultanée de données avec le noeud parent et le noeud enfant pendant le créneau temporel réservé selon respectivement la première direction de communication et la deuxième direction de communication.

2. Procédé de communication selon la revendication 1 dans lequel lorsque la valeur du décalage temporel est nulle, aucune communication simultanée de données avec le noeud parent et le noeud enfant pendant le créneau temporel réservé n'est possible.

3. Procédé de communication selon la revendication 1 dans lequel la première direction de communication correspond à une transmission de données par le noeud parent à destination du noeud courant et la deuxième direction de communication correspond à une transmission de données par le noeud enfant à destination du noeud courant, le procédé comprend en outre une étape de transmission, à destination du noeud enfant, d'une valeur d'un temps de propagation des données entre le noeud enfant et le noeud courant destinée à être utilisée par le noeud enfant avec ladite valeur du décalage temporel afin d'ajuster l'horaire de transmission de données à destination du noeud courant.

4. Procédé de communication selon la revendication 1 dans lequel la première direction de communication correspond à une transmission de données par le noeud courant à destination du noeud parent et la deuxième direction de communication correspond à une transmission de données par le noeud courant à destination du noeud enfant, le procédé comprend en outre une étape de réception d'une valeur d'un temps de propagation des données entre le noeud courant et le noeud parent, transmise par le noeud parent, destinée à être utilisée par le noeud courant afin d'ajuster l'horaire de transmission de données à destination du noeud parent.

5. Procédé de communication de données entre un noeud courant et un noeud enfant du noeud courant communicant entre eux en mode bidirectionnel à l'alternat, le procédé de communication étant mis en oeuvre par le noeud enfant et comprenant les étapes suivantes :
- réception, en provenance du noeud courant, d'un message comprenant une direction de communication, une valeur d'un temps de propagation des données entre le noeud enfant et le noeud courant et une valeur, déterminée par le noeud courant, d'un décalage temporel destiné à être utilisé par le noeud enfant afin d'ajuster un horaire de communication de données avec le noeud courant, l'ajustement de l'horaire de communication permettant la communication desdites données entre le noeud courant et le noeud enfant durant un créneau temporel réservé,
- lorsque ladite valeur du décalage temporel est non nulle, détermination de l'horaire de communication de données avec le noeud courant en ajoutant la valeur du décalage temporel à un premier horaire obtenu en décalant un horaire de communication théorique de la valeur du temps de propagation des données entre le noeud enfant et le noeud courant,
- communication de données avec le noeud courant pendant le créneau temporel réservé selon la direction de communication à l'horaire de communication précédemment déterminé.

6. Procédé de communication selon la revendication 5 dans lequel la direction de communication correspond à une transmission de données par le noeud courant à destination du noeud enfant, le procédé de communication comprend en outre des étapes de :
- détermination de l'horaire de réception de données émises par le noeud courant au moyen de ladite valeur du décalage temporel.

7. Équipement de communication apte à communiquer avec un équipement de communication parent et un équipement de communication enfant en mode bidirectionnel à l'alternat, l'équipement de communication comprenant :
- des moyens de réception d'une demande de réservation, émise par l'équipement de communication parent, d'au moins un créneau temporel d'un canal de communication établi entre l'équipement de communication parent et l'équipement de communication, le créneau temporel réservé étant associé à une première direction de communication,
- des moyens de détermination d'une valeur d'un décalage temporel destiné à être utilisé par l'équipement de communication enfant afin d'ajuster un horaire de communication de données avec l'équipement de communication, l'ajustement de l'horaire de communication permettant la communication desdites données entre l'équipement de communication et l'équipement de communication enfant durant le créneau temporel réservé,
- des moyens de transmission à destination de l'équipement de communication enfant de ladite valeur du décalage temporel et d'une deuxième direction de communication,
- des moyens de communication simultanée de données avec l'équipement de communication parent et l'équipement de communication enfant pendant le créneau temporel réservé selon respectivement la première direction de communication et la deuxième direction de communication lorsque ladite valeur du décalage temporel est non nulle.

8. Équipement de communication, dit enfant, apte à communiquer avec un équipement de communication, dit courant, en mode bidirectionnel à l'alternat, l'équipement de communication enfant comprenant:
- des moyens de réception, en provenance de l'équipement de communication courant, d'un message comprenant une direction de communication, une valeur d'un temps de propagation des données entre le noeud enfant et le noeud courant et une valeur, déterminée par le noeud courant, d'un décalage temporel destiné à être utilisé par l'équipement de communication enfant afin d'ajuster un horaire de communication de données avec l'équipement de communication courant, l'ajustement de l'horaire de communication permettant la communication desdites données entre l'équipement de communication courant et l'équipement de communication enfant durant un créneau temporel réservé,
- des moyens de détermination de l'horaire de communication de données avec l'équipement de communication courant lorsque ladite valeur du décalage temporel est non nulle en ajoutant la valeur du décalage temporel à un premier horaire obtenu en décalant un horaire de communication théorique de la valeur du temps de propagation des données entre le noeud enfant et le noeud courant,
- des moyens de communication de données avec l'équipement de communication courant pendant le créneau temporel réservé selon la direction de communication à l'horaire de communication précédemment déterminé.

9. Produit programme d'ordinateur comprenant des instructions de code de programme pour la mise en oeuvre d'un procédé selon l'une quelconque des revendications 1 à 4, lorsqu'il est exécuté par un processeur.

10. Produit programme d'ordinateur comprenant des instructions de code de programme pour la mise en oeuvre d'un procédé selon l'une quelconque des revendications 5 à 6, lorsqu'il est exécuté par un processeur.

## Patentansprüche

1. Verfahren zur Datenkommunikation zwischen einem aktuellen Knoten, einem Elternknoten des aktuellen Knotens und einem Kindknoten des aktuellen Knotens, die untereinander alternierend im bidirektionalen Modus kommunizieren, wobei das Kommunikationsverfahren durch den aktuellen Knoten durchgeführt wird und die folgenden Schritte umfasst:
- Empfangen einer vom Elternknoten gesendeten Reservierungsanfrage für mindestens einen Zeitschlitz eines zwischen dem Elternknoten und dem aktuellen Knoten aufgebauten Kommunikationskanals, wobei der reservierte Zeitschlitz mit einer ersten Kommunikationsrichtung verknüpft ist,
- Bestimmen eines Zeitversatzwertes, der dazu vorgesehen ist, vom Kindknoten zum Anpassen eines Zeitplans der Datenkommunikation mit dem aktuellen Knoten verwendet zu werden, wobei die Anpassung des Kommunikationszeitplans die Kommunikation der Daten zwischen dem aktuellen Knoten und dem Kindknoten während des reservierten Zeitschlitzes ermöglicht,
- Übertragen des Zeitversatzwertes und einer zweiten Kommunikationsrichtung an den Kindknoten,
- wenn der Zeitversatzwert nicht null ist, gleichzeitige Datenkommunikation mit dem Elternknoten und dem Kindknoten während des reservierten Zeitschlitzes in der ersten Kommunikationsrichtung bzw. in der zweiten Kommunikationsrichtung.

2. Kommunikationsverfahren nach Anspruch 1, wobei keine gleichzeitige Datenkommunikation mit dem Elternknoten und dem Kindknoten während des reservierten Zeitschlitzes möglich ist, wenn der Zeitversatzwert null ist.

3. Kommunikationsverfahren nach Anspruch 1, wobei die erste Kommunikationsrichtung einer Datenübertragung vom Elternknoten an den aktuellen Knoten entspricht und die zweite Kommunikationsrichtung einer Datenübertragung vom Kindknoten an den aktuellen Knoten entspricht, das Verfahren außerdem einen Schritt des Übertragens eines Zeitwertes der Datenweiterleitung zwischen dem Kindknoten und dem aktuellen Knoten an den aktuellen Knoten umfasst, der dazu vorgesehen ist, vom Kindknoten mit dem Zeitversatzwert verwendet zu werden, um den Zeitplan der Datenübertragung zum aktuellen Knoten anzupassen.

4. Kommunikationsverfahren nach Anspruch 1, wobei die erste Kommunikationsrichtung einer Datenübertragung durch den aktuellen Knoten an den Elternknoten und die zweite Kommunikationsrichtung einer Datenübertragung durch den aktuellen Knoten an den Kindknoten entspricht, wobei das Verfahren außerdem einen Schritt des Empfangens eines Zeitwertes der Datenweiterleitung zwischen dem aktuellen Knoten und dem Elternknoten, übertragen vom Elternknoten, umfasst, der dazu vorgesehen ist, vom aktuellen Knoten verwendet zu werden, um den Zeitplan der Datenübertragung an den Elternknoten anzupassen.

5. Verfahren zur Datenkommunikation zwischen einem aktuellen Knoten und einem Kindknoten des aktuellen Knotens, die untereinander alternierend im bidirektionalen Modus kommunizieren, wobei das Kommunikationsverfahren durch den Kindknoten durchgeführt wird und die folgenden Schritte umfasst:
- Empfangen einer Nachricht vom aktuellen Knoten, die eine Kommunikationsrichtung, einen Zeitwert der Datenweiterleitung zwischen dem Kindknoten und dem aktuellen Knoten und einen vom aktuellen Knoten bestimmten Zeitversatzwert umfasst, der dazu vorgesehen ist, vom Kindknoten verwendet zu werden, um einen Zeitplan der Datenkommunikation mit dem aktuellen Knoten anzupassen, wobei die Anpassung des Kommunikationszeitplans die Datenkommunikation zwischen dem aktuellen Knoten und dem Kindknoten während eines reservierten Zeitschlitzes ermöglicht,
- wenn der Zeitversatzwert nicht null ist, Bestimmen des Zeitplans der Datenkommunikation mit dem aktuellen Knoten durch Hinzufügen des Zeitversatzwertes zu einem erhaltenen ersten Zeitplan, indem ein theoretischer Kommunikationszeitplan um den Zeitwert der Datenweiterleitung zwischen dem Kindknoten und dem aktuellen Knoten versetzt wird,
- Datenkommunikation mit dem aktuellen Knoten während des reservierten Zeitschlitzes in der Kommunikationsrichtung in dem zuvor bestimmten Zeitplan.

6. Kommunikationsverfahren nach Anspruch 5, wobei die Kommunikationsrichtung einer Datenübertragung durch den aktuellen Knoten an den Kindknoten entspricht und das Kommunikationsverfahren außerdem folgende Schritte umfasst:
- Bestimmen des Zeitplans für den Empfang von Daten, die vom aktuellen Knoten gesendet werden, mittels des Zeitversatzwertes.

7. Kommunikationseinrichtung, die fähig ist, mit einer Elternkommunikationseinrichtung und einer Kindkommunikationseinrichtung alternierend im bidirektionalen Modus zu kommunizieren, wobei die Kommunikationseinrichtung umfasst:
- Mittel zum Empfang einer von der Elternkommunikationseinrichtung gesendeten Reservierungsanfrage für mindestens einen Zeitschlitz eines zwischen der Elternkommunikationseinrichtung und der Kommunikationseinrichtung aufgebauten Kommunikationskanals, wobei der reservierte Zeitschlitz mit einer ersten Kommunikationsrichtung verknüpft ist,
- Mittel zur Bestimmung eines Zeitversatzwertes, der dazu vorgesehen ist, von der Kindkommunikationseinrichtung verwendet zu werden, einen Zeitplan der Datenkommunikation mit der Kommunikationseinrichtung anzupassen, wobei die Anpassung des Kommunikationszeitplans die Datenkommunikation zwischen der Kommunikationseinrichtung und der Kindkommunikationseinrichtung während des reservierten Zeitschlitzes ermöglicht,
- Mittel zur Übertragung des Zeitversatzwertes und einer zweiten Kommunikationsrichtung an die Kindkommunikationseinrichtung,
- Mittel zur gleichzeitigen Datenkommunikation mit der Elternkommunikationseinrichtung und der Kindkommunikationseinrichtung während des reservierten Zeitschlitzes in der ersten Kommunikationsrichtung bzw. der zweiten Kommunikationsrichtung, wenn der Zeitversatzwert nicht null ist.

8. Kommunikationseinrichtung, Kind genannt, die fähig ist, mit einer Kommunikationseinrichtung, aktuelle genannt, alternierend im bidirektionalen Modus zu kommunizieren, wobei die Kindkommunikationseinrichtung umfasst:
- Mittel zum Empfang einer von der aktuellen Kommunikationseinrichtung kommenden Nachricht, die eine Kommunikationsrichtung, einen Zeitwert der Datenweiterleitung zwischen dem Kindknoten und dem aktuellen Knoten und einen vom aktuellen Knoten bestimmten Zeitversatzwert umfasst, der dazu vorgesehen ist, von der Kindkommunikationseinrichtung verwendet zu werden, um einen Zeitplan der Datenkommunikation mit der aktuellen Kommunikationseinrichtung anzupassen, wobei die Anpassung des Kommunikationszeitplans die Datenkommunikation zwischen der aktuellen Kommunikationseinrichtung und der Kindkommunikationseinrichtung während eines reservierten Zeitschlitzes ermöglicht,
- Mittel zur Bestimmung des Zeitplans der Datenkommunikation mit der aktuellen Kommunikationseinrichtung, wenn der Zeitversatzwert nicht null ist, durch Hinzufügen des Zeitversatzwertes zu einem erhaltenen ersten Zeitplan, indem ein theoretischer Kommunikationszeitplan um den Zeitwert der Datenweiterleitung zwischen dem Kindknoten und dem aktuellen Knoten versetzt wird,
- Mittel zur Datenkommunikation mit der Kommunikationseinrichtung während des reservierten Zeitschlitzes in der Kommunikationsrichtung im zuvor bestimmten Kommunikationszeitplan.

9. Computerprogrammprodukt, das Programmcodeanweisungen zur Durchführung eines Verfahrens nach einem der Ansprüche 1 bis 4 umfasst, wenn es von einem Prozessor ausgeführt wird.

10. Computerprogrammprodukt, das Programmcodeanweisungen zur Durchführung eines Verfahrens nach einem der Ansprüche 5 bis 6 umfasst, wenn es von einem Prozessor ausgeführt wird.

## Claims

1. Method for communicating data between a current node, a parent node of the current node and a child node of the current node communicating with one another in half-duplex mode, the communication method being implemented by the current node and comprising the following steps:
- receiving a reservation request, sent by the parent node, to reserve at least one time slot on a communication channel established between the parent node and the current node, the reserved time slot being associated with a first communication direction,
- determining a value of a time offset intended to be used by the child node in order to adjust a data communication time for communicating data with the current node, adjusting the communication time making it possible to communicate said data between the current node and the child node during the reserved time slot,
- transmitting, to the child node, said value of the time offset and a second communication direction,
- when said value of the time offset is non-zero, simultaneously communicating data with the parent node and the child node during the reserved time slot in the first communication direction and the second communication direction, respectively.

2. Communication method according to Claim 1, wherein, when the value of the time offset is zero, no simultaneous communication of data with the parent node and the child node during the reserved time slot is possible.

3. Communication method according to Claim 1, wherein the first communication direction corresponds to transmission of data by the parent node to the current node and the second communication direction corresponds to transmission of data by the child node to the current node, the method furthermore comprising a step of transmitting, to the child node, a value of a propagation time of data between the child node and the current node, which value is intended to be used by the child node with said value of the time offset in order to adjust the data transmission time for transmitting data to the current node.

4. Communication method according to Claim 1, wherein the first communication direction corresponds to transmission of data by the current node to the parent node and the second communication direction corresponds to transmission of data by the current node to the child node, the method furthermore comprising a step of receiving a value of a propagation time of data between the current node and the parent node, transmitted by the parent node, which value is intended to be used by the current node in order to adjust the data transmission time for transmitting data to the parent node.

5. Method for communicating data between a current node and a child node of the current node communicating with one another in half-duplex mode, the communication method being implemented by the child node and comprising the following steps:
- receiving, from the current node, a message comprising a communication direction, a value of a propagation time of data between the child node and the current node and a value, determined by the current node, of a time offset intended to be used by the child node in order to adjust a data communication time for communicating data with the current node, adjusting the communication time making it possible to communicate said data between the current node and the child node during a reserved time slot,
- when said value of the time offset is non-zero, determining the data communication time for communicating data with the current node by adding the value of the time offset to a first time obtained by shifting a theoretical communication time by the value of the propagation time of data between the child node and the current node,
- communicating data with the current node during the reserved time slot in the communication direction at the previously determined communication time.

6. Communication method according to Claim 5, wherein the communication direction corresponds to transmission of data by the current node to the child node, the communication method furthermore comprising steps of:
- determining the data reception time for receiving data sent by the current node by way of said value of the time offset.

7. Communication equipment able to communicate with a parent communication equipment and a child communication equipment in half-duplex mode, the communication equipment comprising:
- means for receiving a reservation request, sent by the parent communication equipment, to reserve at least one time slot on a communication channel established between the parent communication equipment and the communication equipment, the reserved time slot being associated with a first communication direction,
- means for determining a value of a time offset intended to be used by the child communication equipment in order to adjust a data communication time for communicating data with the communication equipment, adjusting the communication time making it possible to communicate said data between the communication equipment and the child communication equipment during the reserved time slot,
- means for transmitting, to the child communication equipment, said value of the time offset and a second communication direction,
- means for simultaneously communicating data with the parent communication equipment and the child communication equipment during the reserved time slot in the first communication direction and the second communication direction, respectively, when said value of the time offset is non-zero.

8. Communication equipment, called child communication equipment, able to communicate with a communication equipment, called current communication equipment, in half-duplex mode, the child communication equipment comprising:
- means for receiving, from the current communication equipment, a message comprising a communication direction, a value of a propagation time of data between the child node and the current node and a value, determined by the current node, of a time offset intended to be used by the communication equipment in order to adjust a data communication time for communicating data with the current communication equipment, adjusting the communication time making it possible to communicate said data between the current communication equipment and the child communication equipment during a reserved time slot,
- means for determining the data communication time for communicating data with the communication equipment when said value of the time offset is non-zero, by adding the value of the time offset to a first time obtained by shifting a theoretical communication time by the value of the propagation time of data between the child node and the current node,
- means for communicating data with the current communication equipment during the reserved time slot in the communication direction at the previously determined communication time.

9. Computer program product comprising program code instructions for implementing a method according to any one of Claims 1 to 4 when it is executed by a processor.

10. Computer program product comprising program code instructions for implementing a method according to either one of Claims 5 and 6 when it is executed by a processor.
